# EUROPÄISCHE PATENTSCHRIFT

(11) **EP 2 274 583 B1**
(45) Veröffentlichungstag und Bekanntmachung des Hinweises auf die Patenterteilung: **29.02.2012**
(21) Anmeldenummer: 09741781.0
(22) Anmeldetag: 19.03.2009
(51) Int. Cl.: G01F 23/22, G01F 23/24

(54) **VERFAHREN UND VORRICHTUNG ZUR ÜBERWACHUNG DES FÜLLSTANDS EINER FLÜSSIGKEIT IN EINEM FLÜSSIGKEITSBEHÄLTER**
METHOD AND DEVICE FOR MONITORING THE FILL LEVEL OF A LIQUID IN A LIQUID CONTAINER
PROCÉDÉ ET DISPOSITIF DE SURVEILLANCE DU NIVEAU DE REMPLISSAGE D'UN LIQUIDE DANS UN RÉSERVOIR DE LIQUIDE

(30) Priorität: 06.05.2008 DE 102008022363
(43) Veröffentlichungstag der Anmeldung: 19.01.2011
(73) Patentinhaber: Areva NP GmbH, 91052 Erlangen (DE)
(72) Erfinder: NIEDZBALLA, Günter, 65428 Rüsselsheim (DE)
(74) Vertreter: Tergau & Walkenhorst
(86) Internationale Anmeldenummer: PCT/EP2009/002032
(87) Internationale Veröffentlichungsnummer: WO 2009/135562

(56) Entgegenhaltungen:
- DE-A1-102006 025 220
- JP-A- 1 035 220
- US-A- 3 435 680

## Beschreibung

Die Erfindung betrifft ein Verfahren zur Überwachung des Füllstands einer Flüssigkeit in einem Flüssigkeitsbehälter, insbesondere zur Überwachung des Kühlmittelfüllstandes in einem Reaktordruckbehälter einer Druckwasserreaktoranlage, bei dem anhand der gemessenen Temperaturdifferenz zwischen einem beheizten Thermoelement und einem ihm zugeordneten unbeheizten Thermoelement, die beide im Flüssigkeitsbehälter angeordnet sind, auf das Absinken des Flüssigkeitsspiegels unter die Einbauhöhe des beheizten Thermoelementes geschlossen wird. Die Erfindung betrifft ferner eine elektronische Auswerte- und Steuereinheit zur Durchführung des Verfahrens sowie eine Vorrichtung zur Füllstandsüberwachung mit einer derartigen Auswerte- und Steuereinheit.

Messvorrichtungen oder Füllstandssonden, bei denen anhand der von einem beheizten Thermoelement erzeugten Thermospannung auf die Füllstandshöhe in einem Flüssigkeitsbehälter geschlossen wird, werden insbesondere in Kernkraftwerken eingesetzt, da sie gegenüber auf anderen Messprinzipien beruhenden Messvorrichtungen vergleichsweise unempfindlich gegen radioaktive Strahlung sind und daher auch bei einem Störfall mit gegebenenfalls erhöhten Strahlungswerten zuverlässig arbeiten können. Derartige Messvorrichtungen finden beispielsweise im Reaktordruckbehälter eines Druckwasserreaktors Anwendung, um dort- insbesondere während des An- und Abfahrbetriebes und bei instationären Betriebszuständen - die Pegelhöhe der durch den Primärkreislauf der Kraftwerksanlage strömenden Kühlflüssigkeit oberhalb der Brennelemente zu überwachen.

Das Messprinzip nutzt die unterschiedlichen Wärmeübergangscharakteristiken aus, die beim Übergang der Wärme von einem Heizelement auf ein umgebendes flüssiges Kühlmittel einerseits und auf ein gas- oder dampfförmiges Medium andererseits auftreten. Solange das Heizelement von flüssigem Kühlmedium umgeben ist, wird die von ihm erzeugte Wärme rasch abgeführt, so dass selbst in seiner unmittelbaren Umgebung die Temperatur nur unwesentlich oberhalb derjenigen Umgebungstemperatur liegt, die sich im unbeheizten Falle einstellen würde. Tritt nun beispielsweise während des regulären Reaktorbetriebs oder auch bei einem Reaktorstörfall die Situation ein, dass betriebsbedingt oder aufgrund eines Druckverlustes im Primärkreislauf der Flüssigkeitspegel im Reaktordruckbehälter unter die Höhe des Heizelementes sinkt, dieses mithin von dampfförmigem Kühlmittel umgeben ist, so verschlechtern sich die Wärmeübergangseigenschaften. Dies hat zur Folge, dass die Temperatur in der Umgebung des Heizelementes ansteigt, was sich durch ein benachbart zum Heizelement angebrachtes Thermometer oder einen Temperaturmessfühler nachweisen lässt.

Aufgrund ihrer zuverlässigen und robusten Betriebsweise kommen als Temperaturmessfühler in der Regel Thermoelemente zum Einsatz, die eine im Wesentlichen der Temperatur proportionale Thermospannung liefern.

Üblicherweise sind mehrere beheizte Thermoelemente in bestimmten Abständen voneinander an einem stab- oder röhrenförmigen Träger oder an/in einem länglichen Messrohr angeordnet, das in die hinsichtlich ihres Pegelstandes zu überwachende Flüssigkeit eintaucht, und in dessen Inneren auch die zur Stromversorgung der Heizelemente und die zur Signalübermittlung an eine externe Auswerteeinheit notwendigen Versorgungs- und Signalleitungen geführt sind. Die in verschiedenen Höhen oder Messpositionen angeordneten Sensoren ermöglichen somit eine digitale, räumlich diskrete Anzeige der Füllstandshöhe im Behälter, wobei die (örtliche) Auflösung von der Anzahl der Thermosensoren pro Höhenabschnitt abhängt.

Eine Messvorrichtung dieser Art ist beispielsweise aus der DE 10 2006 025 220 A1 bekannt. Neben den als primären Signalgebern wirksamen beheizten Thermoelementen sind dabei auch noch unbeheizte Thermoelemente im Inneren des Messrohres angeordnet, die ein dem jeweiligen Primärsignal zugeordnetes Referenzsignal liefern. Auf diese Weise lässt sich bei der Auswertung der Temperaturinformationen und der daraus abgeleiteten Ermittlung der Füllstandshöhe auch eine zeitliche Variation der Flüssigkeits- oder Umgebungstemperatur berücksichtigen. Dadurch wird vermieden, dass beispielsweise ein Anstieg oder eine Senkung der

Flüssigkeitstemperatur fälschlicherweise als Variation der Füllhöhe gedeutet oder eine tatsächliche Veränderung der Füllhöhe durch eine gleichzeitige Temperaturänderung der Flüssigkeit "verdeckt" werden.

Die DE 10 2006 025 220 A1 offenbart außerdem, dass das plötzliche Ansteigen der Temperaturdifferenz zwischen einander zugeordneten beheizten und unbeheizten Thermoelementen ein sicherer Indikator für ein abgesunkenes Füllstandsniveau ist.

Üblicherweise wird bei der Auswertung der Messsignale die Temperaturdifferenz zwischen einem beheizten Thermoelement und einem ihm zugeordneten unbeheizten (Referenz-) Thermoelement ermittelt. Ein Alarm wird ausgelöst, wenn die Temperaturdifferenz einen bestimmten vorgegebenen Wert erreicht, der nicht mehr mit normalen Temperaturfluktuationen des Reaktormediums verwechselt werden kann, sondern zuverlässig signalisiert, dass der Flüssigkeitsspiegel unter die Einbauhöhe des beheizten Thermoelementes im Flüssigkeitsbehälter gesunken ist. Zur Alarmauslösung benötigt man also entweder Informationen über die Temperatur des beheizten und des zugehörigen unbeheizten Thermoelementes (Referenztemperatur) und bildet dann die Temperaturdifferenz in der Auswerteelektronik, oder man verschaltet die beheizten und unbeheizten Thermoelemente so miteinander, dass das resultierende Signal direkt die Temperaturdifferenz zwischen beiden widerspiegelt.

Im kerntechnischen Kontext heißt das: Durch eine derartige Nutzung der Referenztemperaturmessung wirken sich Änderungen der Kühlmitteltemperatur im Reaktor beim An- und Abfahren oder plötzliche Temperaturänderungen infolge von außerordentlichen Leistungserhöhungen oder so genannten kalten Strähnen auf die Temperaturdifferenz nicht oder zumindest kaum aus, da die beheizten und die zugehörigen unbeheizten Thermoelemente davon gleichermaßen betroffen sind.

Dies gilt strikt allerdings nur bei einer idealisierten Betrachtungsweise. In der Praxis hingegen müssen Effekte von sekundärer Ordnung berücksichtigt werden:

Dazu zählt vor allem die Tatsache, dass sich ohne eine aktive Heizstromregelung die Temperaturdifferenz zwischen beheizten und unbeheizten Thermoelementen mit steigender Umgebungstemperatur, d. h. mit steigender Temperatur des Reaktorkühlmittels, verringert. Das liegt unter anderem daran, dass mit steigender Medientemperatur im Flüssigkeitsbehälter auch der Heizdraht mit den zur Beheizung der Thermoelemente vorgesehenen Heizelementen oder Heizzonen (Heiz-drahtabschnitte mit erhöhtem Widerstand) stärker (von außen) erwärmt wird. Dadurch erhöht sich der Widerstand des Heizdrahtes und bei unveränderter Spannung durchfließt ihn ein geringerer Strom. Infolge dessen sinkt auch die Wärmeleistung des Heizelementes, da diese proportional zum Quadrat des ihn durchfließenden Stromes ist (P = R*I²).

Das bedeutet: Da einerseits bei ungeregeltem Heizstrom die Temperaturdifferenz zwischen beheizten und unbeheizten, von Flüssigkeit umgebenen Thermoelementen mit steigender Temperatur der Flüssigkeit abnimmt, andererseits aber aus Gründen der regelungstechnischen Einfachheit üblicherweise ein einziger, konstanter Schwellenwert der Temperaturdifferenz zur Alarmauslösung festgesetzt wird, vergrößert sich mit steigender Temperatur die zur Alarmauslösung erforderliche Temperaturerhöhung des beheizten Thermoelementes, die beim Absinken des Flüssigkeitsspiegels und beim Übertritt in die Dampfphase durch die Änderung der Wärmeübergangscharakteristik bewirkt wird.

Ist die erforderliche Temperaturerhöhung bis zum Erreichen des Schwellenwertes zu groß, dann kann dies zu einer unzulässig langen Ansprechzeit führen, die den sicherheitstechnischen Vorgaben nicht mehr entspricht. Außerdem führt eine kleinere Heizleistung bei zugleich gesteigerter Umgebungstemperatur auch zu einem kleineren Signalsprung, wenn der Flüssigkeitspegel unter die Höhe des beheizten Thermoelementes sinkt. Das bedeutet, dass im ungünstigsten Fall der Alarm gar nicht mehr ausgelöst wird.

Um die beschriebenen Effekte zu kompensieren, wurden ein Verfahren und eine entsprechend angepasste Messvorrichtung entwickelt, bei denen der Heizstrom des Heizdrahtes so geregelt wird, dass er sich auch bei steigenden Betriebstemperaturen nicht verringert bzw. sogar etwas ansteigt, um gerade im Hochtemperaturbereich die Reaktionszeit des Systems, sprich die Ansprechzeit im Alarmfall, zu verkürzen. Durch eine derartige Heizstromregelung erreicht man in der Praxis, dass die Temperaturdifferenz ("Delta-T") zwischen dem beheizten und dem zugehörigen unbeheizten Thermoelement in der Flüssigkeit näherungsweise konstant, d. h. unabhängig von der Betriebstemperatur ist.

Mit anderen Worten: Die Heizstromregelung führt zu einer annähernd waagerechten Kennlinie in einem Diagramm, bei dem die Temperaturdifferenz zwischen beheiztem und unbeheiztem Thermoelement - in Flüssigkeit - über der Medientemperatur aufgetragen ist ("Delta-T über T"). Dadurch ist es möglich, einen einzigen Grenzwert für die Temperaturdifferenz zwischen beheiztem und unbeheiztem Thermoelement zu bestimmen,
- bei dessen Überschreiten ein Alarm ausgelöst wird, der zuverlässig signalisiert, dass der Füllstand unter das beheizte Thermoelement gefallen ist,
- der für den gesamten zulässigen Temperaturbereich der zu überwachenden Flüssigkeit (Reaktorkühlmedium) gilt,
- und der akzeptable Ansprechzeiten ermöglicht.

Neben diesen offensichtlichen Vorteilen besitzt die Methode der Heizstromregelung allerdings auch Nachteile:
Ein wesentlicher Nachteil besteht darin, dass die Heizstromregelung unter ungünstigen Umständen ausfallen könnte. Bei einem unterstellten Ausfall der Heizstromregelung würde sich die Kennlinie der Temperaturdifferenz zwischen beheiztem und
unbeheiztem Thermoelement, aufgetragen über der Betriebstemperatur, wieder ungünstig verändern.

Im kerntechnischen Anwendungsfall heißt das: Wenn man nach einem solchen Regelungsausfall während des leistungsbetriebes zur Verringerung der Ansprechzeit bzw. zur Sicherstellung der Alarmauslösung den Heizstrom manuell erhöht, dann führt dies zu einer Alarmauslösung beim Abfahren des Reaktors, obwohl der Kühlmittelstand in Wirklichkeit gar nicht abgesunken ist (falscher Alarm). In Abhängigkeit von evtl. realisierten Verriegelungen könnte so eine falsche Alarmauslösung zum automatischen Anfahren der Hochdruckeinspeisepumpen führen und somit schließlich zu einer unerwünschten Druckerhöhung im Primärkreislauf mit anschließendem Ansprechen der Sicherheitsventile. Aufgrund dieses Verhaltens kann man das Messsystem nicht bei allen Betriebstemperaturen mit der auf die höchste Betriebstemperatur abgestimmten Heizleistung betreiben, was im Hinblick auf die angestrebte Höhe des Signalsprungs im Ansprechfall eigentlich wünschenswert wäre.

Daneben bestehen auch noch weitere Probleme: Wenn Teile des Heizdrahtes von einem kälteren Medium umströmt werden, dann führt dies zu einer Verringerung des Heizstromes und damit neben einer Verringerung der Temperaturdifferenz zwischen beheizten und unbeheizten Thermoelementen auch zu einem geringeren Signalsprung. Dies liegt daran, dass die zur Zeit gebräuchliche Regelung die Änderung der Mediumtemperatur nur indirekt über die Änderung des Heizdrahtwiderstandes erfasst.

Diese indirekte Regelung hat auch zur Folge, dass der Heizdraht aus einem Material bestehen muss, dessen spezifischer Widerstand sich signifikant in Abhängigkeit von der Temperatur ändert, denn das ist eine Voraussetzung für eine stabile Regelung. Dieser Umstand hat starken Einfluss auf das Sondendesign, da man sicherstellen muss, dass der eingesetzte Heizdraht die benötigten Eigenschaften besitzt. Dies kann einen beträchtlichen Koordinierungsaufwand bzgl. der Schnittstelle zwischen der eigentlichen Messsonde und der Auswerteelektronik hervorrufen.

Der vorliegenden Erfindung liegt daher die Aufgabe zugrunde, ein Verfahren und eine zugehörige Vorrichtung zur Füllstandsüberwachung anzugeben, die bei gering gehaltenem apparativen und regelungstechnischen Aufwand eine besonders zuverlässige Alarmauslösung mit kurzen Ansprechzeiten ermöglichen, sobald der zu überwachende Flüssigkeitspegel einen kritischen Wert unterschreitet.

In Bezug auf das Verfahren wird die Aufgabe erfindungsgemäß durch die Merkmale des Anspruchs 1 gelöst.

Die Erfindung knüpft an den durch die DE 102 006 025 220 A1 nahegelegten Gedanken an, dass der zeitliche Verlauf der Temperaturdifferenz fortwährend auf einem signifikanten, insbesondere sprunghaften, Anstieg innerhalb eines vor dem jeweiligen Auswertezeitpunkt liegenden Zeitintervalls von vorab festgelegter Dauer überwacht wird, wobei ein Alarmsignal ausgegeben wird, sobald die Änderung der Temperaturdifferenz innerhalb des Zeitintervalls einen vorab festgelegten Grenzwert erreicht oder überschreitet.

Die Erfindung geht ferner von der Überlegung aus, dass die Auswertung der gemessenen Temperaturdifferenz zwischen beheiztem und unbeheiztem Thermoelement konsequent auf eine möglichst frühzeitige Detektion von vergleichsweise steilen bzw. sprunghaften Anstiegsflanken im Differenzsignal ausgelegt sein sollte, um ein Absinken des Flüssigkeitspegels bereits im Ansatz zu erkennen. Dabei wird die zeitliche Änderung der Temperaturdifferenz innerhalb eines Zeitintervalls von vorab festgelegter Dauer als auslösendes Kriterium definiert. Wenn man den Wert der Temperaturdifferenz in der Art eines Funktionsgraphen über der Zeit aufträgt, bewegt sich dabei gewissermaßen das für die Auswertung relevante Zeitintervall oder "Zeitfenster" mit dem in Richtung der Zeitachse voranschreitenden Funktionsverlauf mit, wird also ständig aktualisiert.

Die Länge des Zeitintervalls ist zweckmäßigerweise derart gewählt, dass sie im Wesentlichen größenordnungsmäßig mit der Zeitskala der zu überwachenden Vorgänge, d. h. der Pegeländerungen und der dadurch hervorgerufenen Temperaturdynamik an den Thermoelementen, übereinstimmt oder etwas kürzer ist. Das Messprinzip ist überdies zweckmäßigerweise auf eine Echtzeitüberwachung abgestimmt: Der Endzeitpunkt des für die Auswertung relevanten Zeitintervalls fällt daher im Wesentlichen mit dem Auswertezeitpunkt zusammen, welcher wiederum im Wesentlichen mit dem Zeitpunkt übereinstimmt, für den der letzte Messwert der Temperaturdifferenz zwischen beheiztem und unbeheiztem Thermoelement zur Verfügung steht.

Erfindungsgemäß wird über eine Vielzahl von periodisch aufeinander folgenden Messzeitpunkten hinweg eine Folge von Differenztemperaturen ermittelt, wobei zu einem Auswertezeitpunkt die Differenzen zwischen dem letzten ermittelten Folgeglied und allen seinen Vorgängern, deren Messzeitpunkte innerhalb eines Zeitintervalls von vorgegebener Länger liegen, gebildet werden, und wobei ein Alarmsignal ausgegeben wird, sobald zumindest eine der Differenzen einen vorab festgelegten Grenzwert erreicht oder überschreitet. Dabei wird der Auswertevorgang zweckmäßigerweise in der Art einer iterativen Prozedur zu jedem Messzeitpunkt wiederholt.

Eine derartige Variante des Verfahrens mit diskreten Zeitschritten eignet sich besonders gut für die Umsetzung innerhalb einer digitalen Auswerteelektronik, insbesondere innerhalb einer digitalen Sicherheitsleittechnik einer kerntechnischen Anlage. Die Zeitspanne zwischen den einzelnen Messzeitpunkten ist dabei vorteilhafterweise wesentlich kürzer gewählt als die Dauer des für die Auswertung relevanten Zeitintervalls. Durch die genannte Art der Differenzenbildung zwischen den Folgegliedern der Messreihe werden besonders konsequent sprunghafte Änderungen der Temperaturdifferenz zwischen dem beheizten und unbeheizten Thermoelement erfasst. Im Extremfall würde bereits ein entsprechender Signalsprung zwischen zwei aufeinander folgenden Zeitschritten (Auswertezeitpunkt und unmittelbar vorangehender Messzeitpunkt) zur sofortigen Alarmauslösung führen. Andererseits führt auch ein nicht so abrupter Anstieg der Temperaturdifferenz zur Alarmauslösung, sofern nur der eingestellte Grenzwert für die Änderung innerhalb des vorgegebenen Auswerteintervalls überschritten wird.

Besonders vorteilhaft ist es bei einer Anwendung im kerntechnischen Umfeld, wenn der zeitliche Abstand zwischen zwei unmittelbar aufeinander folgenden Messzeitpunkten im Bereich zwischen 50 ms und 1000 ms, insbesondere im Bereich zwischen 100 ms und 350 ms, vorgegeben wird. Die Länge des für den jeweiligen Auswertevorgang relevanten Zeitintervalls wird vorteilhafterweise im Bereich zwischen 30 s und 100 s vorgegeben und beträgt insbesondere ungefähr 50 s. Dies entspricht in etwa der Zeitspanne, innerhalb derer typischerweise die thermischen Ausgleichsvorgänge an den Thermoelementen und ihrer Ummantelung abgeschlossen sind, nachdem der Kühlmittelfüllstand im Reaktordruckbehälter unter das beheizte Thermoelement abgesunken ist.

Wenn beispielsweise der zeitliche Abstand zwischen aufeinander folgenden Messzeitpunkten 250 ms beträgt und der für die Auswertung relevante Zeitraum auf 50 s eingestellt ist, so müssen für einen einzelnen Auswertevorgang 200 Messsignale für die Differenztemperatur zwischen beheiztem und unbeheiztem Thermoelement in der Auswerteelektronik zwischengespeichert werden. Vorteilhafterweise erfolgt diese Zwischenspeicherung in einem Speicherbaustein, der nach dem First-in-First-out (FIFO) Prinzip arbeitet. Wie bei einem Schieberegister wird dabei der Speicherinhalt mit jedem Zeitschritt um einen Speicherplatz weitergeschoben und die frei werdende Speicherposition mit dem zuletzt ermittelten Messwert belegt.

Falls die Bildung der Temperaturdifferenz zwischen beheiztem und unbeheiztem Thermoelement erst innerhalb der Auswerteeinrichtung erfolgt und nicht bereits durch eine entsprechende Verschaltung der Thermoelemente ein entsprechendes Differenzsignal bereitgestellt wird, so kann vorteilhafterweise auch eine Zwischenspeicherung der einzelnen Temperatursignale der beiden einander zugeordneten Thermoelemente vorgesehen sein. Die Differenzbildung bzgl. der beiden Thermoelemente erfolgt dann in der Auswerteeinheit, wobei die einzelnen Differenztemperaturen zwischen beheiztem und unbeheiztem Thermoelement dann vorteilhafterweise ebenfalls zwischengespeichert werden, um sie nicht jedes Mal bei der Bildung der Differenzen zwischen zeitlich aufeinander folgenden Folgegliedern neu ausrechnen zu müssen (letzteres wäre prinzipiell aber auch möglich).

In einer vorteilhaften Weiterentwicklung ist eine Alarmstaffelung vorgesehen, bei der für den jeweiligen Auswertevorgang eine Mehrzahl unterschiedlicher Grenzwerte vorgegeben ist, bei deren Erreichen oder Überschreiten jeweils unterschiedliche Alarmmeldungen, gegebenenfalls mit unterschiedlichen Folgereaktionen, ausgelöst werden. Beispielsweise kann man Vorwarnungen bei bestimmen vorher festgelegten, vergleichsweise niedrigen Differenztemperatursprüngen auslösen und so die Aufmerksamkeit des Operators auf evtl. bestehende Problem lenken. Mit anderen Worten kann zunächst die Einleitung einer Alarmbereitschaft vorgesehen sein, auf die Alarmzustände mit unterschiedlicher Schwere bzw. Priorität folgen.

Weiterhin ist es vorteilhaft, wenn ein einmal ausgelöster Alarm oder Alarmbereitschaftszustand wieder zurückgenommen wird, wenn der Füllstand im zu überwachenden Behälter nach anfänglichem Absinken wieder ansteigt.

In einer ersten Variante, die bei Thermoelementen mit oder ohne Heizstromregelung gleichermaßen anwendbar ist, wird der Alarm deaktiviert, wenn nach der Alarmauslösung innerhalb einer vorgegebenen Zeitspanne ein Absinken der Temperaturdifferenz zwischen beheiztem und unbeheiztem Thermoelement um einen vorgegebenen Betrag festgestellt wird. Das heißt, dass auch hier wieder die Änderung des Messwerts innerhalb einer bestimmten Zeitspanne maßgeblich ist.

In einer zweiten Variante, die allerdings nur bei einer Regelung des Heizstromes sinnvoll ist, wird ein einmal ausgelöster Alarm deaktiviert, wenn nach der Alarmauslösung ein Absinken der Temperaturdifferenz auf einen temperaturunabhängig vorgegebenen Schwellenwert oder darunter festgestellt wird.

Alternativ wird in einer dritten Variante die Temperatur und/oder der Druck des hinsichtlich seiner Füllstandshöhe zu überwachenden Mediums im Flüssigkeitsbehälter gemessen und ein einmal ausgelöster Alarm wird wieder deaktiviert, wenn nach der Alarmauslösung ein Absinken der Temperaturdifferenz zwischen beheiztem und unbeheiztem Thermoelement auf einen in Abhängigkeit von der momentanen Temperatur und/oder vom momentanen Druck vorgegebenen Schwellenwert oder darunter festgestellt wird.

In Bezug auf die Vorrichtung wird die eingangs genannte Aufgabe gelöst durch eine elektronische Auswerte- und Steuereinheit zur Verwendung in einer Vorrichtung zur Überwachung des Füllstands einer Flüssigkeit in einem Flüssigkeitsbehälter, gemäß den Merkmalen des Anspruchs 10.

Die elektronische Auswerte- und Steuereinheit ist dabei zweckmäßigerweise Bestandteil einer Vorrichtung zur Überwachung des Flüssigkeitsfüllstandes in einem Flüssigkeitsbehälter, insbesondere zur Überwachung des Kühlmittelfüllstandes in einem Reaktordruckbehälter eines Druckwasserreaktors, welche zumindest ein beheiztes und ein zugehöriges unbeheiztes Thermoelement umfasst, welche an die Auswerte- und Steuereinheit angeschlossen sind.

Das erfindungsgemäße Konzept besitzt gegenüber bislang bekannten oder gebräuchlichen Konzepten eine ganze Reihe von Vorteilen:

### 1. Entfall der Notwendigkeit einer waagrechten Differenztemperaturkennlinie

Wie in der Einleitung beschrieben, ist es bisher notwendig, in der flüssigen Phase eine annähernd gleiche Temperaturdifferenz zwischen beheizten und zugehörigen unbeheizten Thermoelementen zu erreichen, die unabhängig von der Betriebstemperatur ist. Durch die neue Auswertemethode entfällt diese Notwendigkeit einer waagrechten, zur Zeitachse parallelen Kennlinie der Differenztemperatur, da nur Differenztemperaturänderungen innerhalb einer bestimmten Zeitspanne, z. B. innerhalb der letzten 50 s, ausgewertet werden.

### 2. Ausfall der Heizstromregelung ist unproblematisch

Für den Fall, dass eine Heizstromregelung vorgesehen ist, besteht die einzige Anforderung an den Heizstrom jetzt darin, dass er so bemessen sein muss, dass auch bei maximaler Betriebstemperatur noch ein ausreichend hoher Signalsprung (Differenztemperaturänderung) innerhalb einer ausreichend kurzen Zeit gesichert ist, wenn der Flüssigkeitsstand unter das beheizte Thermoelement absinkt. Wenn die

Heizstromregelung so konzipiert ist, dass der Heizstrom bei einem Regelungsausfall seinen für maximale Betriebstemperaturen vorgesehenen Wert annimmt (maximale zulässige Spannung), dann wird die Funktion der Füllstandsmessung auch bei einem Ausfall der Heizstromregelung nicht mehr beeinträchtigt.

### 3. Verzicht auf aktive Heizstromreglung ist möglich

Mit der neuen Art der Signalauswertung ist es prinzipiell auch möglich, den Heizdraht für das beheizte Thermoelement immer mit der für maximale Betriebstemperaturen vorgesehenen Spannung zu betreiben. Man kann ganz auf eine aktive Regelung verzichten, ohne dass dies zu Fehlalarmen beim An- und Abfahren führt. Eine am Heizdraht angelegte konstante Spannung führt beim Abkühlen des Reaktors wegen des abnehmenden Heizdrahtwiderstandes zu einem höheren Strom. Damit erhöht sich die Differenztemperatur zwischen beheiztem und unbeheiztem Thermoelement mit abnehmender Kühlmitteltemperatur im Reaktor, was bislang Fehlalarme auslösen konnte. Das ist aber aufgrund der neuen Methode zur Signalauswertung kein Problem mehr, da diese Temperaturerhöhung des Reaktormediums keinen sprunghaften Charakter hat. Außerdem werden durch den steigenden Heizstrom die Ansprechzeiten kürzer und die Signalsprünge größer.

Wenn die aktive Regelung entfällt, kann auch das Material des Heizdrahtes zwischen den Heizelementen so optimiert werden, dass es einen möglichst geringen Widerstand hat und der Stromverbrauch des Messsystems gesenkt wird. Dabei braucht man keine Rücksicht mehr auf die bisher erforderliche temperaturabhängige Mindeständerung des Heizdrahtwiderstandes zu nehmen, die bisher zum Erreichen einer stabilen Regelung erforderlich war. Im Gegenteil, die Widerstandsänderung des gesamten Heizdrahtes in Abhängigkeit von der Temperatur sollte nunmehr möglichst gering sein, damit die Ströme bei niedrigen Temperaturen nicht zu hoch werden.

Wenn mehrere Thermoelemente vom selben Heizdraht beheizt werden, dann ist es mit der neuen Signalauswertung möglich, nur das am schlechtesten ansprechende Thermoelement bei maximaler Betriebstemperatur zu kalibrieren. Die anderen Thermoelemente muss man nicht extra kalibrieren, da keine waagerechte Differenztemperaturkennlinie mehr erforderlich ist.

Das ist von besonderem Vorteil für das Design solcher Messsonden, bei denen mehrere Thermoelemente von einem einzigen Heizdraht erhitzt werden und bei denen das gleichzeitige Erreichen einer waagerechten Kennlinie für alle gemessenen Differenztemperaturen besonders schwierig ist.

### 4. Bei Bedarf ist eine vereinfachte Heizstromregelung möglich

Wenn man nicht ganz auf eine Regelung des Heizstromes in Abhängigkeit von der Betriebstemperatur verzichten will (z. B. um noch mehr Strom zu sparen), dann kann man die Probleme der derzeitigen Heizstromregelung mit kalten Strähnen vermeiden, indem man den Heizstrom direkt in Abhängigkeit von der durchschnittlichen Medientemperatur festlegt. Das ist aufgrund der verringerten Anforderungen an die Differenztemperaturkennlinie und damit an die Höhe des Heizstromes jetzt ohne nachteilige Auswirkungen möglich.

### 5. Verkürzte Ansprechzeiten

Bisher sind trotz Heizstromregelung und erst recht bei deren Ausfall bei verschiedenen Betriebstemperaturen unterschiedliche Erhöhungen der Differenztemperatur zwischen beheizten und unbeheizten Thermoelementen für eine Alarmauslösung erforderlich. Da durch die neue Methode der Signalauswertung ein Alarm immer dann ausgelöst wird, wenn sich die Differenztemperatur innerhalb eines bestimmten Zeitraumes um einen bestimmten fest vorgegebenen Betrag erhöht hat, verkürzen sich die Ansprechzeiten für alle Betriebstemperaturen auf die bei der bisherigen Auswertungsmethode erreichbaren kürzesten Ansprechzeiten.

### 6. Flexible individuelle Grenzwerte und optimierte Reaktionszeiten

In Verbindung mit einer digitalen Systemarchitektur können bei Bedarf einfach und schnell für jedes Paar von Thermoelementen individuelle Grenzwerte (Differenztemperatursprünge) definiert bzw. parametriert werden, die fertigungsbedingte Besonderheiten berücksichtigen. Durch den Einsatz eines frei programmierbaren Automatisierungssystems, das auch mit den übrigen leittechnischen Einrichtungen wechselwirkt oder Informationen austauscht, können die Grenzwerte außerdem in Abhängigkeit von der Betriebstemperatur und vom Primärkreislaufdruck optimiert werden.

### 7. Gestaffelte Alarmmeldungen

Die Möglichkeit gestaffelter Alarmmeldungen und deren Vorteile wurden bereits weiter oben diskutiert.

### 8. Anpassung und Kommentierung von Alarmmeldungen

Durch die Nutzung der im digitalen Reaktorschutzsystem vorhandenen Informationen kann man die Signale der Füllstandssonden auch in Abhängigkeit von Abweichungen der Reaktoranlage vom Normalbetrieb bewerten (z. B. Ausfall von Kühlmittelpumpen, Druckänderungen im Primärkreislauf etc.). Wenn das Reaktorschutzsystem solche Abweichungen feststellt und man aus vorangegangenen Versuchen oder Berechnungen oder aufgrund betrieblicher Erfahrungen weiß, dass diese Abweichungen Auswirkungen auf die Füllstandsmessung haben können, dann kann ein geeignet konfiguriertes automatisches Expertensystem durch entsprechende Verknüpfungen die Grenzwerte für die Füllstandsmessung anpassen bzw. die ausgegebenen Signale kommentieren. Die Kommentare können beim Auftreten solcher außergewöhnlichen Betriebsfälle automatisch auf einem Bildschirm des Überwachungssystems neben den Wam- oder Alarmsignalen erscheinen und so Fehlinterpretationen beim menschlichen Bediener verhindern.

Die oben genannten Vorteile sind zunächst einmal vom konkreten Design der die beheizten und unbeheizten Thermoelemente tragenden Messsonde unabhängig und lassen sich alleine durch eine entsprechende Gestaltung bzw. Programmierung der elektronischen Auswerte- und Steuereinheit realisieren.

Darüber hinaus ergeben sich auch noch weitere Vorteile, wenn man das Sondendesign an die nunmehr vorhandenen Gegebenheiten und Möglichkeiten bei der Signalauswertung adaptiert:

Wie bereits zum Ausdruck kam, verringert die nunmehr vorgesehene Signalauswertung die Anforderungen an die Heizstromregelung oder macht diese sogar ganz verzichtbar. Dadurch entfällt auch die bislang aufwendige Kalibrierung der Heizstromkennlinie, die vor allem dann schwierig ist, wenn ein und derselbe Heizdraht zur Beheizung mehrerer Thermoelemente in einer Sonde eingesetzt werden. Nunmehr können also mehrere Thermoelemente mit Hilfe des gleichen Heizdrahtes beheizt werden, ohne dass die Qualität der Messung darunter leidet. Dadurch sinkt bei gleich bleibenden Redundanzanforderungen der Verkabelungsaufwand innerhalb einer Sonde bzw. bei gleich bleibendem Verkabelungsaufwand können mehr Messpositionen als bislang verwirklicht werden, insbesondere für eine feinere Höhenauflösung der Füllstandsmessung. Solch eine verbesserte Höhenauflösung erlaubt eine bessere Beobachtung der zeitlichen Füllstandsentwicklung sowie gegebenenfalls eine bessere Vorhersage der künftigen Entwicklung, z. B. durch Extrapolation bisheriger Daten. Zusätzlich können bei einer Verknüpfung der Informationen über die Geschwindigkeit der Flüssigkeitsabsenkung (bzw. über Änderungen der Absenkungsgeschwindigkeit) mit einfachen physikalischen Modellen der Füllstandsdynamik und gegebenenfalls mit weiteren Messdaten des Reaktorschutzsystems Aussagen zur Leckgröße oder zur Wirksamkeit von Gegenmaßnahmen abgeleitet werden.

Zusammengefasst ermöglicht die neue Auswertemethode bei gleichem Design der Messlanzen wie bislang vor allem:
- einen Verzicht auf die Heizstromregelung bzw. eine vereinfachte Ausführung
- verkürzte Ansprechzeiten
- eine Optimierung der Ansprechzeiten in Abhängigkeit von Temperatur oder Druck
- gestaffelte Alarmmeldungen
- eine Bewertung und Kommentierung der Sondensignale bei Transienten
- eine Reduzierung der Wahrscheinlichkeit von Fehlalarmen
- eine Reduktion des Stromverbrauches.

Ein entsprechend modifiziertes Lanzendesign ermöglicht zusammen mit der neuen Signalauswertung:
- mehr Messpunkte pro Höheneinheit
- Vorhersagen zur Füllstandsentwicklung
- Aussagen zur Leckgröße.

Außerdem wird durch die vorgeschlagenen Änderungen die Ankopplung der Auswerteelektronik an Füllstandsmesslanzen verschiedener Hersteller vereinfacht und es treten weniger Interfaceprobleme auf.

Ein Ausführungsbeispiel der Erfindung wird anhand einer Zeichnung näher erläutert. Darin zeigen:
- FIG. 1: eine stark schematisierte Seitenansicht einer Vorrichtung zur Überwachung des Füllstands einer Flüssigkeit in einem Reaktordruckbehälter mit mehreren Paaren von einander zugeordneten beheizten und unbeheizten Thermoelementen,
- FIG. 2: ein Beispiel für den zeitlichen Verlauf der Temperaturdifferenz zwischen einem beheizten und einem unbeheizten Thermoelement während eines Absinkvorgangs des Flüssigkeitsspiegels bei einer Betriebstemperatur von ca. 115 °C,
- FIG. 3: eine zu dem zeitlichen Verlauf der Temperaturdifferenz gemäß FIG. 2 gehörige Tabelle, deren Einträge ein bevorzugtes Auswerteverfahren für die Füllstandsüberwachung und Alarmauslösung veranschaulichen,
- FIG. 4: ein weiteres Beispiel für den zeitlichen Verlauf der Temperaturdifferenz zwischen einem beheizten und einem unbeheizten Thermoelement während eines Absinkvorgangs des Flüssigkeitsspiegels, hier bei einer Betriebstemperatur von ca. 330 °C, und
- FIG. 5: eine zu dem Verlauf der Temperaturdifferenz gemäß FIG. 4 gehörige Auswertungstabelle.

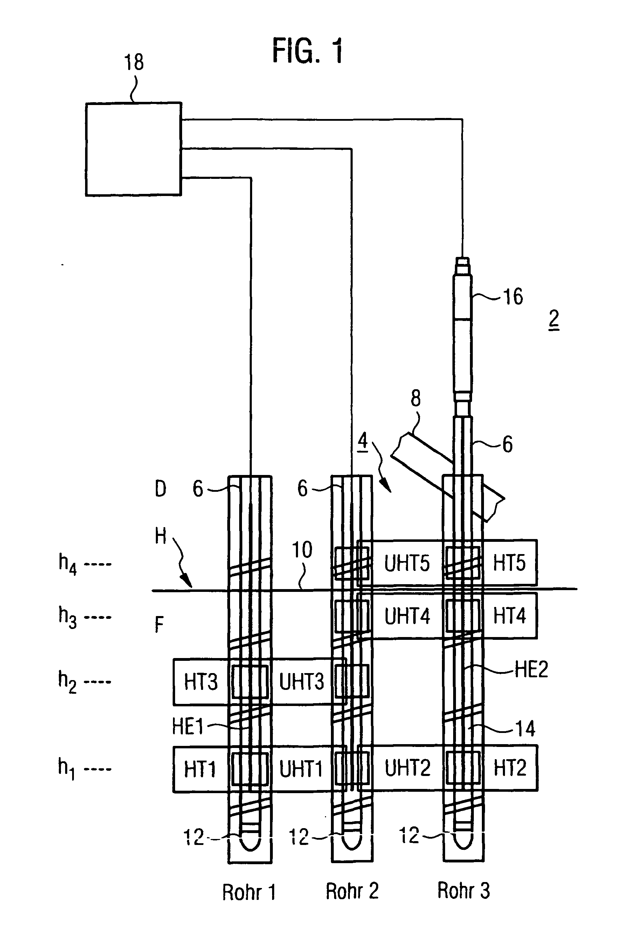

Die in FIG. 1 in einer schematischen Seitenansicht beispielhaft dargestellte Vorrichtung 2 zur Füllstandsmessung dient dazu, den Pegelstand der Kühlflüssigkeit F im Reaktordruckbehälter 4 eines hier nicht näher dargestellten Druckwasserreaktors zu überwachen. Die Vorrichtung 2 umfasst drei jeweils in der Art einer Messlanze gestaltete längliche Messrohre 6, die bei der Montage der Messvorrichtung 2 von oben durch dafür vorgesehene Ausnehmungen in der Deckelplatte 8 ins Innere des Reaktordruckbehälters 4 eingeführt werden, und die beim Betrieb des Kernreaktors zumindest teilweise in die Kühlflüssigkeit F eintauchen. Die Pegelhöhe oder Füllstandshöhe über dem Grund des Behälters ist in FIG. 1 mit H bezeichnet, wobei selbstverständlich auch andere Bezugsniveaus verwendet werden könnten. Oberhalb des Flüssigkeitsspiegels 10 befindet sich dampfförmiges Kühlmedium, kurz: Dampf D.

Die drei Messrohre 6 der Vorrichtung 2 sind jeweils vertikal ausgerichtet und voneinander beabstandet im Reaktordruckbehälter 4 montiert; sie liegen also parallel zueinander, ohne sich jedoch zu berühren. Jedes der drei Messrohre 6 weist ein am unteren Ende wasserdicht verschlossenes zylindrisches Gehäuse 12 auf, das aus einem wasserundurchlässigen, druckstabilen, korrosionsbeständigen und gut wärmeleitfähigen Material besteht: Im Ausführungsbeispiel kommt zu diesem Zweck ein Edelstahl zum Einsatz.

Im Innenraum 14 jedes Messrohres 6 ist eine Anzahl von Thermoelementen angeordnet. Das mit "Rohr 1" bezeichnet Messrohr enthält zwei beheizte Thermoelemente (heated thermocouples), nämlich das auf einer Höhe h₁ befindliche beheizte Thermoelement HT1 und das darüber liegend auf einer Höhe h₂ angeordnete beheizte Thermoelement HT3. Das mit Rohr 3" bezeichnete Messrohr enthält in seinem Innenraum 14 drei beheizte Thermoelemente, nämlich das beheizte Thermoelement HT2 auf der Höhe h₁, darüber liegend auf der Höhe h₃ das beheizte Thermoelement HT4 und schließlich auf der Höhe h₄ das beheizte Thermoelement HT5. Es gilt h₄ > h₃ > h₂ > h₁. Weiterhin sind im Innenraum 14 von Rohr 1 und Rohr 3 Heizelemente (heating elements), nämlich HE1 in Rohr 1 und HE2 in Rohr 3, angeordnet. Die Heizelemente sind jeweils als Heizdrähte ausgebildet, die an den zu beheizenden Thermoelementen HT1 und HT3 bzw. HT2, HT4 und HT5 vorbeigeführt sind, wobei die Heizdrähte in der Nähe dieser Thermoelemente positionierte Heizzonen aufweisen, mittels derer die unmittelbare Umgebung beheizt wird.

Sowohl die Heizelemente HE1 bzw. HE2 als auch die Thermoelemente HT1 und HT3 bzw. HT2, HT4 und HT5 liegen direkt an der Innenwand des jeweils zugehörigen, gut wärmeleitfähigen Gehäuses 12 an. Die Heizdrähte sowie die für die Stromversorgung bzw. Signalübermittlung der Thermoelemente erforderlichen Signal- und Versorgungsleitungen sind im Innenraum 14 des jeweiligen Messrohres 6 bis zu einem außerhalb der Deckelplatte 8 des Reaktordruckbehälters 4 befindlichen Anschlussadapter 16 geführt. Über die beiden zu Rohr 1 und Rohr 3 gehörigen Anschlussadapter 16 (von denen in FIG. 1 nur der zu Rohr 3 gehörige dargestellt ist) sind die Thermoelemente HT1 bis HT5 signalseitig mit einer hier nur schematisch angedeuteten elektronischen Auswerte- und Steuereinheit 18 verbunden, die ihrerseits mit weiteren Komponenten eines Reaktorschutzsystems, insbesondere mit einem Alarmsignalgeber, in Verbindung steht (nicht dargestellt). Der Alarmsignalgeber kann auch in die Auswerte- und Steuereinheit 18 integriert sein.

Das mit "Rohr 2" bezeichnete Messrohr 6 enthält in seinem Innenraum 14 fünf unbeheizte Thermoelemente (unheated thermocouples), von denen zwei auf der Höhe h₁ angeordnet sind (UHT1 und UHT2), und je eines auf der Höhe h₂, h₃ und h₄ (nämlich UHT3, UHT4 und UHT5). Auch die unbeheizten Thermoelemente UHT1 bis UHT5 haben jeweils direkten Kontakt mit der Innenwand des gut wärmeleitfähigen Gehäuses 12 und sind signalseitig über einen hier nicht näher dargestellten Anschlussadapter mit der extern stationierten Auswerteeinheit 18 verbunden. Es ist jedoch keinerlei Heizeinrichtung oder dergleichen in Rohr 2 vorgesehen.

Zum Zweck der Signalauswertung und Füllstandsermittlung werden je ein beheiztes Thermoelement (Primärsignalgeber) und ein auf gleicher Höhe - innerhalb eines anderen Messrohres - befindliches unbeheiztes Thermoelement (Referenzsignalgeber) zusammengefasst. Bei der Signalverarbeitung in der Auswerteeinheit 18 werden also die fünf Paare HT1, UHT1 bis HT5, UHT5 gebildet, was in FIG. 1 schematisch durch die die zueinander komplementären Thermoelemente einrahmenden durchgezogenen Linien angedeutet ist. Aus der gemessenen Thermospannung eines jeden Thermoelementes wird die an seiner Position herrschende Temperatur abgeleitet. Weiterhin wird für jedes der Paare HT1, UHT1 bis HT5. UHT5 die Temperaturdifferenz zwischen beheiztem und unbeheiztem Thermoelement gebildet.

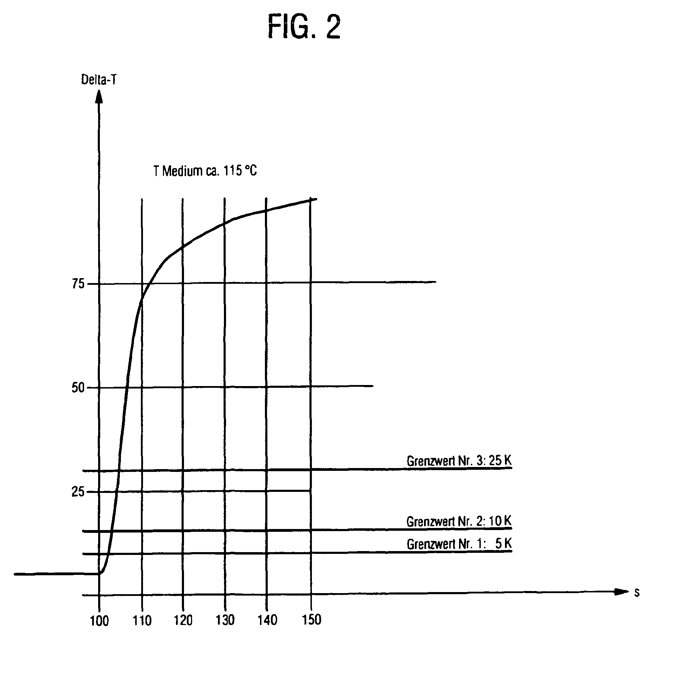

Die Wirkungsweise der beheizten und unbeheizten Thermoelemente und ihre Verwendung zur Füllstandsmessung werden exemplarisch anhand des Signalgeberpaares HT5. UHT5 beschrieben. In FIG. 2 wird von einem Reaktorbetrieb mit Füllstandshöhe H im Reaktordruckbehälter 4 und mit intaktem Kühlkreislauf bei einer Kühlmitteltemperatur von ca. 115 °C ausgegangen (z.B. während des Anfahrbetriebes, bei dem die Erhöhung der Kühlmitteltemperatur ca. 10 - 30 °C pro Stunde beträgt). Solange der Pegelstand der Kühlflüssigkeit F oberhalb der Einbauhöhe des beheizten Thermoelementes HT5 liegt (H > h₄), wird die vom Heizelement HE2 in der Umgebung des Thermoelementes HT5 abgegebene Wärme vergleichsweise effektiv durch die Gehäusewand des Gehäuses 12 abgeführt und auf die Kühlflüssigkeit F übertragen. Da ständig neue, das heißt vergleichsweise kalte Kühlflüssigkeit F in den Reaktordruckbehälter nachströmt (offenes System im Sinne der Thermodynamik), steigt die Wandtemperatur in der Umgebung des Thermoelementes HT5 gegenüber dem unbeheizten Fall, repräsentiert durch das unbeheizte Thermoelement UHT5, kaum an.

Das heißt, die in FIG. 2 als Funktion der Zeit t aufgetragene Temperaturdifferenz Delta-T oder kurz DT zwischen dem beheizten Thermoelement HT5 und dem unbeheizten Thermoelement UHT 5 liegt in der Nähe von Null (genauer gesagt, hier bei 5 ° C). Dies würde sich auch dann nicht merklich ändern, wenn sich bei gleich bleibender Füllstandshöhe H der Kühlflüssigkeit F im Reaktordruckbehälter 4 ihre Temperatur (global) änderte, z. B. anstiege, da die beiden relevanten Thermoelemente HT5, UHT5 davon gleichermaßen betroffen wären. Auch gegebenenfalls vorhandene Effekte einer Temperaturschichtung im Reaktordruckbehälter, also Temperaturgradienten in vertikaler Richtung, spielen keine Rolle, da die beiden einander zugeordneten Messpositionen auf gleicher Höhe, hier nämlich h₄, liegen.

Das Bild ändert sich, wenn zum - hier willkürlich angenommenen - Zeitpunkt t = 100 s die Füllstandshöhe H der Kühlflüssigkeit F unter das Niveau h₄ fällt (H < h₄). Zwar ändern sich die Umgebungstemperaturen bei den beiden relevanten Thermoelementen HT5 und UHT5 erst einmal nicht wesentlich, da der oberhalb des Flüssigkeitsspiegels 10 befindliche Dampf D ähnliche Temperaturen wie die Kühlflüssigkeit F aufweist. Jedoch verschlechtern sich schlagartig die Wärmeübergangseigenschaften in Bezug auf den Wärmeübergang am Ort des beheizten Thermoelementes HT5. Die durch das Heizelement HE2 freigesetzte Wärmemenge kann dann nicht mehr im gleichen Maße wie zuvor in die Umgebung abtransportiert werden, so dass die vom beheizten Thermoelement HT5 gemessene Temperatur drastisch ansteigt, während die vom unbeheizten Thermoelement UHT5 gemessene Temperatur ungefähr konstant bleibt. Bedingt durch die vergleichsweise langsam ablaufenden thermischen Ausgleichsvorgänge (Wärmeleitung) in der Wand des Gehäuses 12 erfolgt der Temperaturanstieg beim beheizten Thermoelement HT5 allerdings verzögert gegenüber dem Absinken des Flüssigkeitsspiegels. Somit ist das allmähliche Ansteigen der Temperaturdifferenz zwischen beheiztem und unbeheiztem Thermoelement, hier in FIG. 2 ein Anstieg um ca. 100 °C, ein sicherer Indikator für das unter die Höhe h₄ abgesunkene Füllstandsniveau.

Analoge Überlegungen gelten bezüglich der Niveaus h₃, h₂ und h₁ und die ihnen jeweils zugeordneten Thermoelemente.

Da das Absinken der Kühlflüssigkeit F unter das Niveau h₁ als besonders kritisch angesehen wird, ist die Füllstandsüberwachung bezüglich dieses Niveaus besonders abgesichert: Mit den beiden Sensorpaaren HT1, UHT1 und HT2, UHT2 sind zwei voneinander unabhängige, redundante Messungen vorgesehen. In einer alternativen, hier nicht gezeigten Ausführungsform, liegt Redundanz lediglich bezüglich der beiden beheizten Thermoelemente HT1 und HT2 vor, während nur ein einziges unbeheiztes Thermoelement, also entweder UHT1 oder UHT2, als Referenzsignalgeber für diese beiden beheizten Thermoelemente vorgesehen ist.

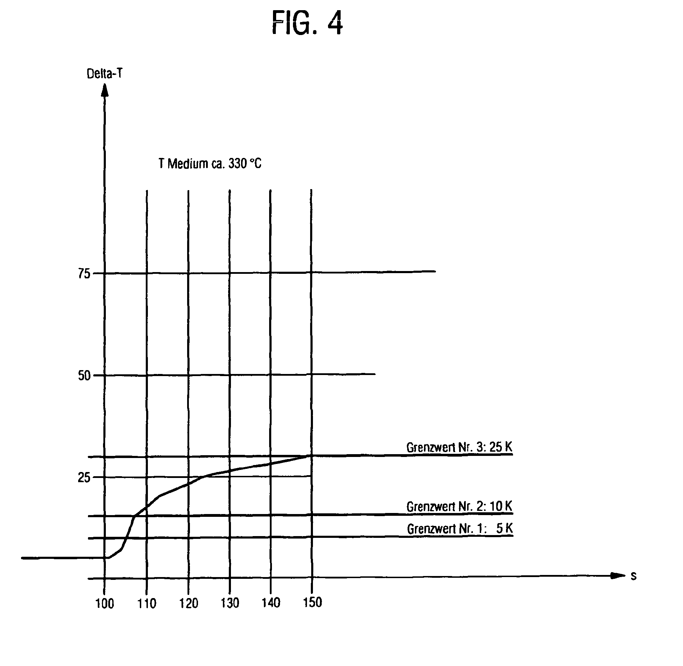

Bei einer höheren Temperatur der Kühlflüssigkeit F von beispielsweise ca. 330 °C fällt die Höhe des Signalsprungs bei Absinken des Pegelstandes unter das beheizte Thermoelement geringer aus, da der Effekt der lokalen Beheizung durch das Heizelement sich aufgrund der ohnehin schon vergleichsweise hohen Umgebungstemperatur nicht so stark bemerkbar macht. Dies ist anhand des in FIG. 4 dargestellten zeitlichen Verlaufs der Differenztemperatur zwischen beheiztem und unbeheiztem Thermoelement (z. B. HT5 und UHT5) gut sichtbar. Das auslösende Ereignis, d. h. das Absinken des Pegelstandes, wurde auch hier bei t = 100 s angenommen. Die anschließende zeitliche Änderung der Temperaturdifferenz zwischen beheiztem und unbeheiztem Thermoelement beträgt hier insgesamt nur rund 30 °C.

Ohne eine temperaturabhängige Heizstromregelung für das jeweilige Heizelement ist es also nicht sinnvoll, einen einzigen, temperaturunabhängigen Grenzwert für den Signalsprung festzusetzen, bei dessen Erreichen oder Überschreiten auf das Absinken des Pegelstandes geschlossen und ein entsprechender Alarm ausgelöst wird. Selbst mit einer kompensierenden Heizstromregelung könnte es unter Umständen verhältnismäßig lange dauern, bis die thermischen Ausgleichsvorgänge innerhalb des Messrohres 6 abgeschlossen sind und solch ein global definierter Grenzwert erreicht wird. Darüber hinaus wäre ein Ausfall der Heizstromregelung problematisch.

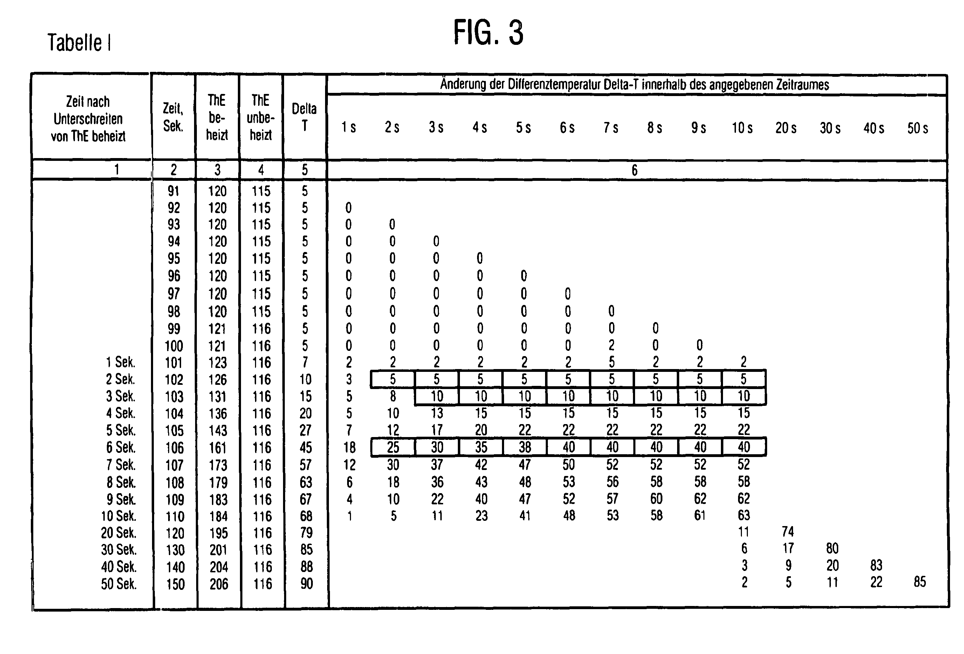

Zur Vermeidung derartiger Schwierigkeiten ist vorliegend eine besonders zuverlässige und schnell auf potentielle Gefahrenzustände ansprechende Signalauswertung in der Auswerteeinheit 18 vorgesehen, die nachfolgend anhand des in FIG. 2 dargestellten zeitlichen Verlaufs der Temperaturdifferenz zwischen beheiztem und unbeheiztem Thermoelement bei einer Kühlmitteltemperatur von ca. 115 °C und anhand der zugehörigen Auswertungstabelle (Tabelle I) in FIG. 3 beschrieben ist.

In regelmäßigen Abständen, hier z. B. alle δt = 1000 ms, erfolgt eine Zwischenspeicherung der Temperaturmesswerte des beheizten und des zugehörigen unbeheizten Thermoelementes. Die einzelnen Messzeitpunkte ..., t₂, t₁, t₀, t₁, t₂, ... sind dabei in Spalte 2 der Tabelle I eingetragen; die zugehörigen Temperaturmesswerte stehen in den Spalten 3 und 4. Ebenfalls alle δt = 1000 ms werden in der Auswerteeinheit 18 die Temperaturdifferenzen Delta-T oder kurz DT zwischen dem beheizten und dem zugehörigen unbeheizten Thermoelement gebildet und ebenso wie die Einzeltemperaturen zwischengespeichert. Die entsprechenden Werte sind in Spaite 5 der Tabelle eingetragen.

Die Auswertung erfolgt in Echtzeit zu jedem der Messzeitpunkte ..., t₂, t₁, t₀, t₁, t₂, ..., wobei die tief gestellten Indizes die Folge der Messzeitpunkte durchnummerieren. Die zugehörige Folge gemessener Differenztemperaturen wird mit ..., DT(t₋₂), DT(t₋₁), DT(t₀), DT(t₁), DT(t₂), ... bezeichnet. Mit t₀ sei der momentane Auswertezeitpunkt bezeichnet.

Für die Auswertung werden der Messwert von DT zum Zeitpunkt t₀, also DT(t₀), sowie seine N = 50 Vorgänger DT(t₋₁), ..., DT(t_{-N}) herangezogen, was bei der gewählten Schrittdauer von δt = t₀ - t₋₁ = t₋₁ - t₋₂ = ...= 1000 ms = 1 s einem Auswerteintervall Δt = t₀ - t_{-N} = 50 s entspricht. Dabei werden sämtliche Differenzen δ₁ = DT(t₀) - DT(t₋₁₎..., δ_{N} = DT(t₀) - DT(t_{-N}) zwischen dem letzten ermittelten Messwert DT(t₀) und allen seinen zwischengespeicherten Vorgängen, die innerhalb des genannten Auswerteintervalls Δt - hier also innerhalb der zurückliegenden 50 s - liegen, gebildet. Diese Differenzen δ₁ bis δ_{N} sind jeweils in Form einer Zeile für jeden der Messzeitpunkte im Feld 6 der Tabelle eingetragen. Ein Alarm wird ausgelöst, wenn eine der auf diese Weise ermittelten Differenzen (Delta-T-Änderungen) einen bestimmten vorher festgelegten Grenzwert, z. B. ΔDT = 5 °C, 10 °C oder 25 °C erreicht oder überschritten hat. Dabei kann insbesondere eine Alarmstaffelung mit mehreren Grenzwerten und jeweils unterschiedlichen Folgereaktionen vorgesehen sein. Zum nächsten Messzeitpunkt wiederholt sich der Auswertevorgang mit entsprechend aktualisierten Werten.

Wie anhand der eingerahmten Werte in der Tabelle I zu erkennen ist, würde mit der in FIG. 2 dargestellten (fiktiven) Beispielkurve für ca. 115 °C Kühlmitteltemperatur bei einem auf 5 °C Differenztemperaturänderung eingestellten Grenzwert bereits 2 s, nachdem der Füllstand das beheizte Thermoelement unterschritten hat, ein Alarm ausgelöst. Stellt man den Grenzwert auf 10 °C ein, dann erfolgt im Beispiel die Alarmauslösung nach 3 s, bei 25 °C nach 6 s.

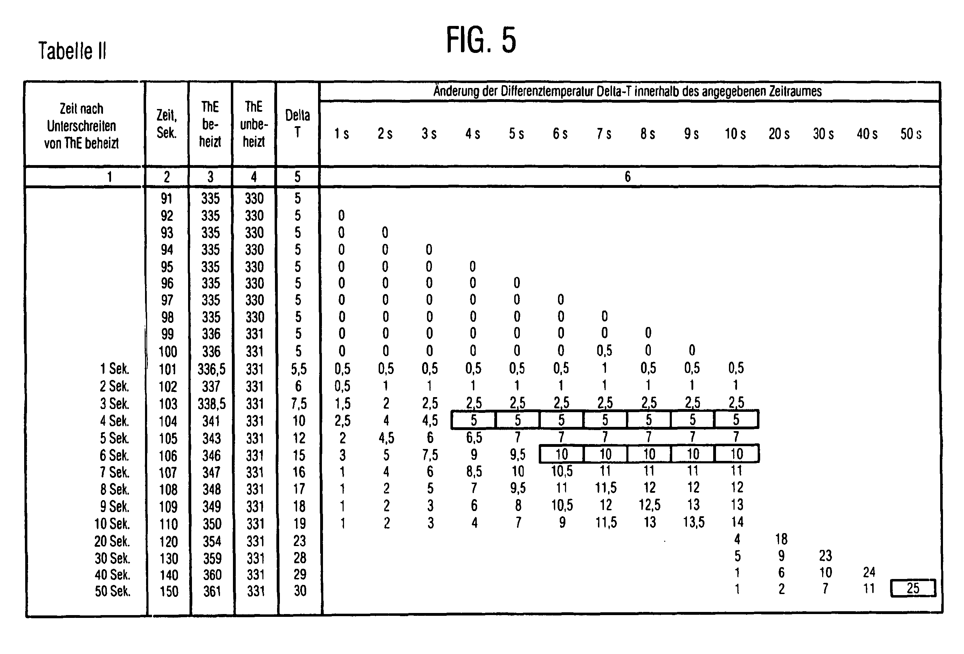

In der Tabelle II gemäß FIG. 5 ist derselbe Auswertevorgang mit gleich eingestellten Parametern für die in der FIG. 4 dargestellte Beispielkurve mit einer Kühlmitteltemperatur von ca. 330 °C veranschaulicht. Die Alarmschwellen sind wieder auf Differenztemperaturänderungen von 5 °C, 10 °C und 25 °C gesetzt und werden nunmehr nach 4 s, 6 s bzw. 50 s erreicht.

Die Schrittdauer wurde hier im Beispiel aus Gründen einer vereinfachten Illustration auf δt = 1000 ms festgesetzt; in der Praxis wären für ein optimiertes Ansprechverhalten kürzere Zeitspannen von z. B. δt = 250 ms denkbar und zweckmäßig.

### Bezugszeichenliste

- 2: Messvorrichtung / Füllstandssonde
- 4: Reaktordruckbehälter
- 6: Messrohr
- 8: Deckelplatte
- 10: Flüssigkeitsspiegel
- 12: Gehäuse
- 14: Innenraum
- 16: Anschlussadapter
- 18: Auswerteeinheit

- D: Dampf
- F: Kühlflüssigkeit
- H: Füllstandshöhe

- HT: beheiztes Thermoelement
- UHT: unbeheiztes Thermoelement
- HE: Heizelement

- DT: Temperaturdifferenz
- ΔDT: Anstieg der Temperaturdifferenz

- t: Zeit
- δt: Zeitschritt
- Δt: Zeitintervall / Auswerteintervall

## Patentansprüche

1. Verfahren zur Überwachung des Füllstands einer Flüssigkeit (F) in einem Flüssigkeitsbehälter, insbesondere zur Überwachung des Kühlmittelfüllstandes in einem Reaktordruckbehälter (4) einer Druckwasserreaktoranlage, bei dem anhand der gemessenen Temperaturdifferenz (DT) zwischen einem beheizten Thermoelement (HT) und einem ihm zugeordneten unbeheizten Thermoelement (UHT), die beide im Flüssigkeitsbehälter angeordnet sind, auf das Absinken des Flüssigkeitsspiegels (10) unter die Einbauhöhe des beheizten Thermoelementes (HT) geschlossen wird,
**dadurch gekennzeichnet, dass**
der zeitliche Verlauf der Temperaturdifferenz (DT) fortwährend auf einen signifikanten, insbesondere sprunghaften, Anstieg innerhalb eines vor dem jeweiligen Auswertezeitpunkt (t₀) liegenden Zeitintervalls von vorab festgelegter Dauer (Δt) überwacht wird, wobei ein Alarmsignal ausgegeben wird, sobald die Änderung (ΔDT) der Temperaturdifferenz (DT) innerhalb des Zeitintervalls einen vorab festgelegten Grenzwert erreicht oder überschreitet, wobei über eine Vielzahl von periodisch aufeinanderfolgenden Messzeitpunkten (..., t₋₂, t₋₁, t₀, t₁, t₂, ...) hinweg eine Folge von Temperaturdifferenzen (..., -DT(t₋₂), DT(t₋₁), DT(t₀), DT(t₁), DT(t₂), ...) ermittelt wird, wobei zu einem Auswertezeitpunkt (t₀) die Differenzen (δ₁ = DT(t₀) - DT(t₋₁), δ_{N} = DT(t₀) - DT(t_{-N})) zwischen dem letzten ermittelten Folgeglied (DT(t₀)) und allen seinen Vorgängern (DT(t₋₁), ..., DT(t_{-N})), deren Messzeitpunkte innerhalb eines Zeitintervalls (t_{-N}, ..., t₀) von vorgegebener Länge (Δt = t₀ - t_{-N}) liegen, gebildet werden, und wobei ein Alarmsignal ausgegeben wird, sobald zumindest eine der Differenzen (δ₁, δ_{N}) einen vorab festgelegten Grenzwert erreicht oder überschreitet.

2. Verfahren nach Anspruch 1, wobei der Auswertevorgang in der Art einer iterativen Prozedur zu jedem Messzeitpunkt (..., t₂₋, t₋₁ , t₀, t₁ , t₂, ...) wiederholt wird.

3. Verfahren nach Anspruch 1 oder 2, wobei der zeitliche Abstand zwischen zwei unmittelbar aufeinander folgenden Messzeitpunkten (δt = t₂ - t₁ = t₁ - t₀ = ...) im Bereich zwischen 50 ms und 1000 ms, insbesondere im Bereich zwischen 100 ms und 350 ms, vorgegeben wird.

4. Verfahren nach einem der Ansprüche 1 bis 3, wobei die Länge (Δt) des Zeitintervalls im Bereich zwischen 30 s und 100 s vorgegeben wird, insbesondere ungefähr 50 s beträgt.

5. Verfahren nach einem der Ansprüche 1 bis 4, bei dem die gemessenen Temperaturdifferenzen (DT) in einem FIFO-Speicher zwischengespeichert werden.

6. Verfahren nach einem der Ansprüche 1 bis 5, bei dem eine Mehrzahl unterschiedlicher Grenzwerte vorgeben ist, bei deren Erreichen oder Überschreiten jeweils unterschiedliche Alarmmeldungen ausgelöst werden.

7. Verfahren nach einem der Ansprüche 1 bis 6, bei dem ein einmal ausgelöster Alarm wieder deaktiviert wird, wenn nach der Alarmauslösung innerhalb einer vorgegebenen Zeitspanne ein Absinken der Temperaturdifferenz (DT) um einen vorgegebenen Betrag festgestellt wird.

8. Verfahren nach einem der Ansprüche 1 bis 6, bei dem ein einmal ausgelöster Alarm wieder deaktiviert wird, wenn nach der Alarmauslösung ein Absinken der Temperaturdifferenz (DT) auf einen temperaturunabhängig vorgegebenen Schwellenwert oder darunter festgestellt wird.

9. Verfahren nach einem der Ansprüche 1 bis 6, bei dem die Temperatur und/oder der Druck des hinsichtlich seiner Füllstandshöhe zu überwachenden Mediums im Flüssigkeitsbehälter gemessen werden, und bei dem ein einmal ausgelöster Alarm wieder deaktiviert wird, wenn nach der Alarmauslösung ein Absinken der Temperaturdifferenz (DT) auf einen in Abhängigkeit von der momentanen Temperatur und/oder vom momentanen Druck vorgegeben Schwellenwert oder darunter festgestellt wird.

10. Elektronische Auswerte- und Steuereinheit (18) zur Verwendung in einer Vorrichtung (2) zur Überwachung des Füllstands einer Flüssigkeit (F) in einem Flüssigkeitsbehälter, umfassend
• je einen Signaleingang für die Messsignale eines zugehörigen beheizten Thermoelementes (HT) und eines unbeheizten Thermoelementes (UHT), sowie eine Subtrahiereinheit, die aus den Messsignalen ein für die Temperaturdifferenz (DT) bezüglich der beiden Thermoelemente (HT, UHT) charakteristisches Temperaturdifferenzsignat bildet,
• oder alternativ einen Signaleingang für ein Temperaturdifferenzsignal einer Schaltung mit einem beheizten Thermoelement (HT) und einem unbeheizten Thermoelement (UHT),
• eine Auswerteeinheit (18) mit Mitteln für eine fortwährende Überwachung des zeitlichen Verlaufs der Temperaturdifferenz (DT) auf einen signifikanten, insbesondere sprunghaften, Anstieg innerhalb eines vor dem jeweiligen Auswertezeitpunkt (t₀) liegenden Zeitintervalls von vorab festgelegter Dauer (Δt),
• sowie Mittel zur Ausgabe eines Alarmsignals, sobald der Anstieg (ΔDT) der Temperaturdifferenz (DT) innerhalb des Zeitintervalls einen vorab festgelegten Grenzwert erreicht oder überschreitet,
wobei die Auswerteeinheit (18) derart konfiguriert ist, dass sie über eine Vielzahl von periodisch aufeinanderfolgenden Messzeitpunkten (..., t₋₂, t₋₁, t₀, t₁, t₂, ...) hinweg eine Folge von Temperaturdifferenzen (..., DT(t₋₂), DT(t₋₁), DT(t₀), DT(t₁), DT(t₂), ...) ermittelt, wobei zu einem Auswertezeitpunkt (t₀) die Differenzen (δ1 = DT(t₀) - DT(t₋₁), ..., δ_{N} = DT(t₀) - DT(t_{-N}))zwischen dem letzten ermittelten Folgeglied (DT(t₀)) und allen seinen Vorgängern (DT(t₋₁), ..., DT(t_{-N})), deren Messzeitpunkte innerhalb eines Zeitintervalls (t_{-N}, ..., t₀) von vorgegebener Länge (Δt = t₀ - t_{-N}) liegen, gebildet werden, und wobei ein Alarmsignal ausgegeben wird, sobald zumindest eine der Differenzen δ₁, ..., δ_{N}) einen vorab festgelegten Grenzwert erreicht oder überschreitet.

11. Vorrichtung (2) zur Überwachung des Füllstands einer Flüssigkeit (F) in einem Flüssigkeitsbehälter mit einem beheizten.Thermoelement (HT) und einem unbeheizten Thermoelement (UHT) und mit einer elektronischen Auswerte- und Steuereinheit (18) gemäß Anspruch 10.

## Claims

1. A method for monitoring the fill level of a liquid (F) in a liquid container, in particular for monitoring the coolant fill level in a reactor pressure vessel (4) of a pressurized-water reactor plant, wherein the sinking of the liquid level (10) below the installation height of a heated thermocouple (HT) is inferred using the measured temperature difference (DT) between the heated thermocouple (HT) and an unheated thermocouple (UHT) associated therewith, which are both arranged in the liquid container, **characterized in that**
the temporal profile of the temperature difference (DT) is continuously monitored for a significant, in particular sudden, increase within a time interval, which occurs before the respective evaluation time point (t₀), of a duration Δt) which is previously fixed, an alarm signal being output as soon as the change (ΔDT) in the temperature difference (DT) within the time interval reaches or exceeds a previously fixed limit value, wherein a sequence of temperature differences (..., DT(t₋₂), DT(t₋₁), DT(t₀), DT(t₁), DT(t₂),...) is ascertained over a large number of periodically sequential measurement time points (..., t₋₂, t₋₁, t₀, t₁, t₂, ...), wherein the differences (δ₁ = DT(t₀) - DT(t₋₁), ..., δ_{N} = DT(t₀) - DT(t_{-N})) between the last ascertained sequence element (DT(t₀) and all of its predecessors (DT(t₋₁), ..., DT(t_{-N})), whose measurement time points fall within a time interval (t_{-N}, ..., t₀) of pre-specified length (Δt = t₀-t_{-N}), are formed at an evaluation time point (t₀), and wherein an alarm signal is output as soon as at least one of the differences (δ₁, ..., δ_{N}) reaches or exceeds a previously fixed limit value.

2. The method as claimed in claim 1, wherein the evaluation process is repeated in the manner of an iterative procedure at each measurement time point (..., t₋₂, t₋₁, t₀, t₁, t₂, ...).

3. The method as claimed in claim 1 or 2, wherein the temporal gap between two immediately successive measurement time points (δt = t₂ - t₁ = t₁ - t₀ = ...) is pre-specified in the range between 50 ms and 1000 ms, in particular in the range between 100 ms and 350 ms.

4. The method as claimed in any of claims 1 to 3, wherein the length (Δt) of the time interval is pre-specified in the range between 30 s and 100 s and is, in particular, approximately 50 s.

5. The method as claimed in any of claims 1 to 4, wherein the measured temperature differences (DT) are temporarily stored in a FIFO memory.

6. The method as claimed in any of claims 1 to 5, wherein a plurality of different limit values are pre-specified, where respectively different alerts are triggered when said limit values are reached or exceeded.

7. The method as claimed in any of claims 1 to 6, wherein an alarm, once triggered, will be deactivated if, after the alarm has been triggered, it is determined within a pre-specified time interval that the temperature difference (DT) has dropped by a pre-specified amount.

8. The method as claimed in any of claims 1 to 6, wherein an alarm, once triggered, will be deactivated if, after the alarm has been triggered, it is determined that the temperature difference (DT) has dropped to, or below, a threshold value which is pre-specified in a temperature-independent manner.

9. The method as claimed in any of claims 1 to 6, wherein the temperature and/or the pressure of the medium, which is to be monitored with respect to its fill-level height, in the liquid container are measured and wherein an alarm, once triggered, will be deactivated if, after the alarm has been triggered, it is determined that the temperature difference (DT) has dropped to, or below, a threshold value which is pre-specified as a function of the instantaneous temperature and/or the instantaneous pressure

10. An electronic evaluation and control unit (18) for use in a device (2) for monitoring the fill level of a liquid (F) in a liquid container, comprising:
• in each case one signal input for the measurement signals of an associated heated thermocouple (HT) and an unheated thermocouple (UHT), and a subtraction unit, which forms, from the measurement signals, a temperature-difference signal, which is characteristic for the temperature difference (DT) with respect to the two thermocouples (HT, UHT),
• or, alternatively, a signal input for a temperature-difference signal of a circuit with a heated thermocouple (HT) and an unheated thermocouple (UHT),
• an evaluation unit (18) with means for continuous monitoring of the temporal profile of the temperature difference (DT) for a significant, in particular sudden, increase within a time interval of previously fixed duration (Δt), which time interval occurs before the respective evaluation time point (t₀),
• and means for outputting an alarm signal as soon as the increase (ΔDT) in the temperature difference (DT) reaches or exceeds within the time interval a previously fixed limit value,
the evaluation unit (18) being configured such that it ascertains a sequence of temperature differences (..., DT(t₋₂), DT(t₋₁). DT(t₀), DT(t₁), DT(t₂), ...) over a large number of periodically sequential measurement time points (...,t₋₂, t₋₁, t₀, t₁, t₂, ...), wherein the differences (δ₁ = DT(t₀) - DT(t₋₁), ..., δ_{N} = DT(t₀) - DT(t_{-N})) between the last ascertained sequence element (DT(t₀)) and all of its predecessors (DT(t₋₁), ..., DT(t_{-N})), whose measurement time points fall within a time interval (t_{-N}, ..., t₀) of pre-specified length (Δt = t₀-t_{-N}), are formed at an evaluation time point (t₀), and wherein an alarm signal is output as soon as at least one of the differences (δ₁,.... δ_{N}) reaches or exceeds a previously fixed limit value.

11. A device (2) for monitoring the fill level of a liquid (F) in a liquid container, with a heated thermocouple (HT) and an unheated thermocouple (UHT) and with an electronic evaluation and control unit (18) as claimed in claim 10.

## Revendications

1. Procédé pour le monitorage du niveau d'un liquide (F) dans un réservoir de liquide, en particulier pour le monitorage du niveau du fluide de refroidissement dans la cuve sous pression d'un réacteur (4) d'une installation de réacteur à eau sous pression, dans lequel la baisse du niveau de liquide (10) sous la hauteur d'installation d'un thermocouple chauffé (HT) est inférée au moyen de la différence de température (DT) mesurée entre le thermocouple chauffé (HT) et un thermocouple non chauffé (UHT) y affecté, qui sont tous les deux disposés dans le réservoir de liquide,
**caractérisé en ce que**
le profil temporel de la différence de température (DT) est surveillé continuellement pour détecter une augmentation significative, en particulier rapide, dans un intervalle de temps, qui s'écoule avant le moment d'évaluation (t₀) respectif, d'une durée (Δt) spécifiée d'avance, un signal d'alarme étant sorti dès que le changement (ΔDT) de la différence de température (DT) à l'intérieur de l'intervalle de temps atteint ou dépasse une valeur limite spécifiée d'avance, dans lequel une séquence de différences de température (..., DT(t₂), DT(t₋₁), DT(t₀), DT(t₁), DT(t₂), ...) est détectée à l'aide d'un grand nombre de moments de mesurage (..., t₋₂, t₋₁, t₀, t₁, t₂,...) périodiquement successifs, dans lequel les différences (δ₁ = DT(t₀) - DT(t₋₁), ... , δ_{N} = DT(t₀) - DT(t_{-N})) entre le dernier élément séquentiel (DT(t₀) détecté et tous ses prédécesseurs (DT(t₋₁), ..., DT(t_{-N})), dont les moments de mesurage se trouvent à l'intérieur d'un intervalle de temps (t_{-N}, ..., t₀) d'une longueur prédéfinie (Δt = t₀-t_{-N}), sont formées à un moment d'évaluation (t₀), et dans lequel un signal d'alarme est sorti dès qu'au moins une des différences (δ₁, ..., δ_{N}) atteint ou dépasse une valeur limite spécifiée d'avance.

2. Procédé d'après la revendication 1, dans lequel le processus d'évaluation est répété de la façon d'une procédure itérative à chaque moment de mesurage (..., t₋₂, t₋₁, t₀, t₁, t₂, ...).

3. Procédé d'après la revendication 1 ou 2, dans lequel l'intervalle de temps entre deux moments de mesurage (δt = t₂ - t₁ = t₁ - t₀ = ...) immédiatement successifs est prédéfini dans la gamme entre 50 ms et 1000 ms, en particulier dans la gamme entre 100 ms et 350 ms.

4. Procédé d'après l'une quelconque des revendications 1 to 3, dans lequel la longueur (Δt) de l'intervalle de temps est prédéfini dans la gamme entre 30 s et 100 s et s'élève, en particulier, à environ 50 s.

5. Procédé d'après l'une quelconque des revendications 1 to 4, dans lequel les différences de températures (DT) mesurées sont stockées de façon intermédiaire dans une mémoire FIFO.

6. Procédé d'après l'une quelconque des revendications 1 to 5, dans lequel une pluralité de valeurs limite différentes est prédéfinie, différents alarmes étant déclenchés à chaque fois lorsque dites valeurs limites sont atteintes ou dépassées.

7. Procédé d'après l'une quelconque des revendications 1 to 6, dans lequel un alarme, une fois déclenché, sera déactivé si, après le déclenchement de l'alarme, il est déterminé dans un intervalle de temps prédéfini que la différence de température (DT) a baissé d'un montant prédéfini.

8. Procédé d'après l'une quelconque des revendications 1 to 6, dans lequel un alarme, une fois déclenché, sera déactivé si, après le déclenchement de l'alarme, il est déterminé que la différence de température (DT) d'une façon indépendamment de la température.

9. Procédé d'après l'une quelconque des revendications 1 to 6, dans lequel la température et/ou la pression du milieu, dont le niveau est à surveiller, dans le réservoir de liquide sont mesurées et dans lequel un alarme, une fois déclenché, sera déactivé si, après le déclenchement de l'alarme, il est déterminé que la différence de température (DT) a baissé à, ou sous, une valeur seuil qui est prédéfinie en fonction de la température instantanée et/ou de la pression instantanée.

10. Unité d'évaluation et de commande électronique (18) pour utilisation dans un dispositif (2) pour le monitorage du niveau d'un liquide (F) dans un réservoir de liquide, comprenant:
• à chaque fois, une entrée de signal pour les signaux de mesurage d'un thermocouple chauffé (HT) affecté et d'un thermocouple non chauffé (UHT), ainsi qu'une unité de soustraction, qui forme, des signaux de mesurage, un signal de différence de température qui est caractéristique de la différence de température (DT) concernant les deux thermocouples (HT, UHT),
• ou, alternativement, une entrée de signal pour un signal de différence de température d'un circuit avec un thermocouple chauffé (HT) et un thermocouple non chauffé (UHT),
• une unité d'évaluation (18) avec des moyens pour le monitorage continuel du profil temporel de la différence de température (DT) pour détecter une augmentation significative, en particulier rapide, dans un intervalle de temps, qui s'écoule avant le moment d'évaluation (t₀) respectif, d'une durée (Δt) spécifiée d'avance,
• ainsi que des moyens pour sortir un signal d'alarme dès que l'augmentation (ΔDT) de la différence de température (DT) à l'intérieur de l'intervalle de temps atteint ou dépasse une valeur limite spécifiée d'avance,
l'unité d'évaluation (18) étant configurée de façon qu'elle détecte une séquence de différence de températures (..., DT(t₋₂), DT(t₋₁), DT(t₀), DT(t₁), DT(t₂), ...) à l'aide d'un grand nombre de moments de mesurage (..., t₋₂, t₋₁, t₀, t₁, t₂, ...) périodiquement successifs, dans lequel les différences (δ₁ = DT(t₀) - DT(t₋₁), ..., δ_{N} = DT(t₀) - DT(t_{-N})) entre le dernier élément séquentiel (DT(t₀)) détecté et tous ses prédécesseurs (DT(t₋₁), ..., DT(t_{-N})), dont les moments de mesurage se trouvent à l'intérieur d'un intervalle de temps (t_{-N}, ..., t₀) d'une longueur prédéfinie (Δt = t₀-t_{-N}), sont formées à un moment d'évaluation (t₀), et dans lequel un signal d'alarme est sorti dès qu'au moins une des différences (δ₁, ..., δ_{N}) atteint ou dépasse une valeur limite spécifiée d'avance.

11. Dispositif (2) pour le monitorage du niveau d'un liquide (F) dans un réservoir de liquide, avec un thermocouple chauffé (HT) et un thermocouple non chauffé (UHT) et avec une unité d'évaluation et de commande électronique (18) d'après la revendication 10.
